(19) Europäisches Patentamt
European Patent Office
Office européen des brevets

(11) **EP 3 651 514 B1**

(12) **EUROPEAN PATENT SPECIFICATION**

(45) Date of publication and mention
of the grant of the patent:
**02.06.2021 Bulletin 2021/22**

(21) Application number: **17918870.1**

(22) Date of filing: **27.07.2017**

(51) Int Cl.:
***H04W 72/04*** *(2009.01)*     ***H04L 5/00*** *(2006.01)*
***H04W 72/12*** *(2009.01)*

(86) International application number:
**PCT/CN2017/094783**

(87) International publication number:
**WO 2019/019125 (31.01.2019 Gazette 2019/05)**

(54) **INFORMATION TRANSMISSION METHOD AND DEVICE**

INFORMATIONSÜBERTRAGUNGSVERFAHREN UND -VORRICHTUNG

PROCÉDÉ ET DISPOSITIF DE TRANSMISSION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.05.2020 Bulletin 2020/20**

(73) Proprietor: **Huawei Technologies Co., Ltd.
Longgang District
Shenzhen, Guangdong 518129 (CN)**

(72) Inventors:
• **LUO, Zhihu
Shenzhen
Guangdong 518129 (CN)**
• **TIE, Xiaolei
Shenzhen
Guangdong 518129 (CN)**

• **JIN, Zhe
Shenzhen
Guangdong 518129 (CN)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 675 081     WO-A1-2013/166670
WO-A1-2016/032077     CN-A- 101 123 793
CN-A- 101 753 181     CN-A- 102 685 895
CN-A- 105 451 355     CN-A- 106 572 543**

**Description**

**TECHNICAL FIELD**

This **application** relates to communications technologies, and in particular, to an information transmission method and a device.

**BACKGROUND**

The internet of things (IoT, Internet of things) is the "Internet on which things are connected". To reduce complexity and costs of the internet of things, a mobile communications standardization organization 3GPP (3rd Generation Partnership Project, 3rd generation partnership project) proposes a narrowband internet of things (Narrowband Internet of Things, NB-IOT) at the RAN#69 meeting.

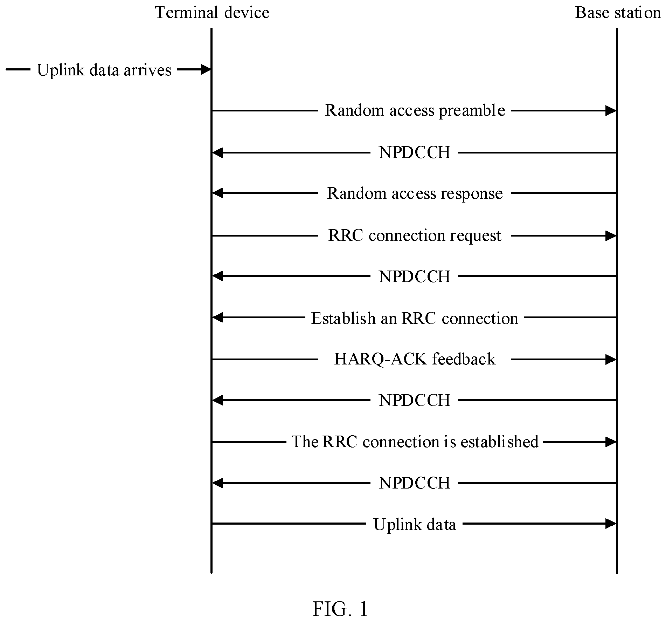

In NB-IoT, when a terminal device needs to send uplink data, but a base station does not schedule and allocate, for UE, an uplink shared channel (Uplink Shared Channel, UL-SCH) resource for sending the uplink data, the terminal device may re-initiate random access to obtain the UL-SCH resource. FIG. 1 is a flowchart of initiating random access by a terminal device in the prior art. As shown in FIG. 1, when uplink data arrives at the terminal device, the terminal device sends a random access preamble to a base station, and the base station returns a random access response to the terminal device. The terminal device sends a radio resource control (Radio Resource Control, RRC) connection request to the base station after receiving the random access response. The base station establishes an RRC connection to the terminal device, and the terminal device feeds back hybrid automatic repeat request (Hybrid Automatic Repeat reQuest, HARQ)-acknowledgment (Acknowledgement, ACK) information to the base station. After the RRC connection is established, each time before receiving downlink data sent by the base station or sending data to the base station, the terminal device needs to listen to a narrowband physical downlink control channel (Narrowband Physical Downlink Control CHannel, NPDCCH) to obtain scheduling information related to scheduling of the downlink data or the uplink data.

In the foregoing method, each time a terminal needs to send uplink data, the terminal needs to re-initiate random access. Consequently, a process is complex, and a delay and power consumption are further increased.

Document WO 2016/032077 A1 discloses a method and apparatus for requesting scheduling for an uplink data transmission in a wireless communication system. The method includes receiving, by a user equipment, an additional scheduling request (SR) resource configuration information including additional SR resource information and buffer size information configured to the additional SR resource in addition to a default SR resource from a base station, transmitting, by the user equipment, an SR through the default SR resource or the additional SR resource to the base station, receiving, by the user equipment, an uplink resource allocation information which is determined according to the resource in which the SR is transmitted from the base station, and transmitting, by the user equipment, the uplink data to the base station through a physical uplink shared channel (PUSCH) resource which is allocated by the uplink resource allocation information.

Document WO 2013/166670 A1 discloses a method and device for configuring resources of an uplink channel. The method comprises: the resource configuration information is sent to user equipment; the resource configuration information is used to indicate a first scheduling request (SR) resource and at least one second SR resource; the user equipment uses the first SR resource to transmit the first SR; the first SR indicates whether the user equipment needs to transmit the uplink data; the at least one second SR resource corresponds to the different data amounts and/or priorities of the uplink data.

Document EP 2 675 081 A1 discloses a method, a system and an apparatus for scheduling uplink data, and is applied to the field of communication technologies. In the method, a base station notifies configuration information to a user equipment, where the configuration information is used to configure the mode in which a scheduling request sent by the user equipment indicates the attribute of buffered uplink data; when receiving the scheduling request sent by the user equipment according to the configuration information, the base station allocates an uplink resource to the user equipment according to indication information carried in the scheduling request. In this way, when the user equipment sends the scheduling request, the scheduling request may indicate that there is uplink data that needs to be sent, and may also indicate specific attribute information of the uplink data, so that the base station can allocate uplink resources.

**SUMMARY**

Embodiments of this application provide an information transmission method and a device. An implementation process is simple, and a delay and power consumption are greatly reduced. The invention is defined by the independent claims.

BRIEF DESCRIPTION OF DRAWINGS

FIG. 1 is a flowchart of initiating random access by a terminal device in the prior art;
FIG. 2 is a schematic diagram of an application scenario of an information transmission method according to an embodiment of this application;
FIG. 3 is a flowchart of an information transmission method according to an embodiment of this application;
FIG. 4 is a schematic diagram of a signal format of a scheduling request according to an embodiment of this application;
FIG. 5 is a schematic diagram of a symbol group format according to an embodiment of this application;
FIG. 6 is a schematic diagram of a signal format of a scheduling request according to an embodiment of this application;
FIG. 7 is a schematic diagram of a signal format of a scheduling request according to an embodiment of this application;
FIG. 8 is a schematic diagram of another signal format of a scheduling request according to an embodiment of this application;
FIG. 9 is a block diagram of a terminal device according to an embodiment of this application;
FIG. 10 is a block diagram of a network device according to an embodiment of this application; and
FIG. 11 is a block diagram of a terminal device according to an embodiment of this application.

**DESCRIPTION OF EMBODIMENTS**

An information transmission method provided in the embodiments of this application is mainly applied to a wireless communications system such as a long term evolution (Long Term Evolution, LTE) system, a long term evolution-advanced LTE-A (LTE Advanced) system, or NB-IOT. There are an entity that may send information and an entity that may receive information in the wireless communications system. The information transmission method may also be applied to another communications system, for example, a mobile communications systems such as a new radio (New Radio, NR) system, a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, a long term evolution-advanced (Advanced long term evolution, LTE-A) system, a universal mobile telecommunications system (Universal Mobile Telecommunication System, UMTS), an evolved long term evolution (evolved Long Term Evolution, eLTE) system, or 5G.

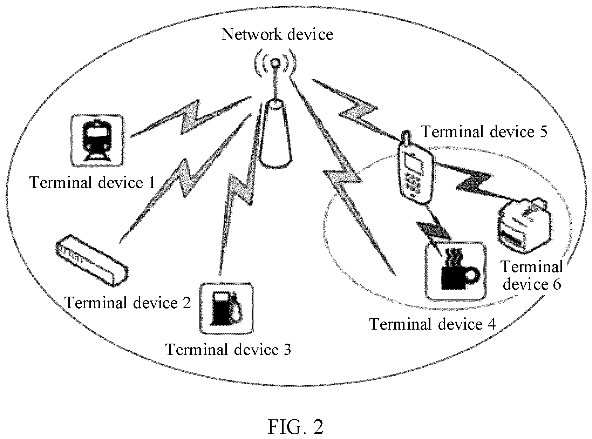

FIG. 2 is a schematic diagram of an application scenario of an information transmission method according to an embodiment of this application. As shown in FIG. 2, a network device and a terminal device 1 to a terminal device 6 form a communications system. In the communications system, a base station sends information to one or more terminal devices in the terminal device 1 to the terminal device 6. In addition, a terminal device 4 to the terminal device 6 also form a communications system. In the communications system, a terminal device 5 may send information to the terminal device 4, the terminal device 6, or both the terminal device 4 and the terminal device 6. The network device may be a common base station (for example, a Node B or an eNB), a new radio controller (New Radio controller, NR controller), a gNode B (gNB) in a 5G system, a centralized network element (Centralized Unit), a new radio base station, a remote radio unit, a micro base station, a relay (relay), a distributed network element (Distributed Unit), a reception point (Transmission Reception Point, TRP), a transmission point (Transmission Point, TP), or any other radio access device. However, this is not limited in this embodiment of this application. The terminal device is also referred to as user equipment (User Equipment, UE), and is a device that provides a user with voice and/or data connectivity, for example, a handheld device or a vehicle-mounted device that has a wireless connection function. Common terminals include a mobile phone, a tablet, a notebook computer, a palmtop computer, a mobile Internet device (mobile internet device, MID), and a wearable device, such as a smartwatch, a smart band, or a pedometer.

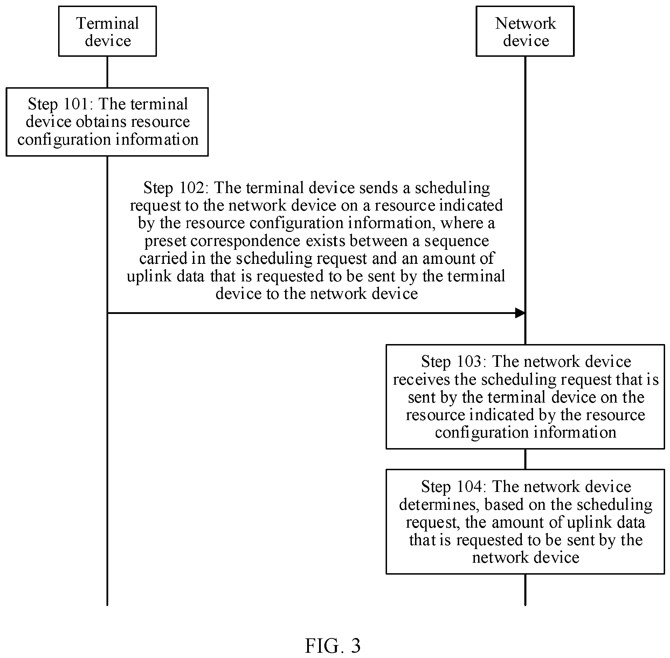

FIG. 3 is a flowchart of an information transmission method according to an embodiment of this application. As shown in FIG. 1, an application scenario of the method includes a terminal device and a network device. The method includes the following steps.

Step 101: The terminal device obtains resource configuration information.

The resource configuration information is used to indicate a resource used by the terminal device to send the scheduling request.

For example, the resource configuration information may include a subcarrier index, a carrier index, a quantity of repetition times, a period, a starting subframe location, and the like; or the resource configuration information may include an index jointly indicated by configuration parameters such as a subcarrier index, a carrier index, a quantity of repetition times, a period, and a starting subframe location.

For example, the resource indicated by the resource configuration information includes all frequency domain resources used to transmit a narrowband physical random access channel (Narrowband Physical Random Access Channel, NPRACH); or includes a subset of all frequency domain resources used to transmit an NPRACH; or includes a frequency domain resource other than a frequency domain resource used for contention-based random access in frequency domain resources used to transmit an NPRACH; or includes a subset of a frequency domain resource other than a frequency domain resource used for contention-based random access in frequency domain resources used to transmit an NPRACH; or includes a frequency-hopping resource other than resources whose quantity is an integer multiple of a quantity of resources in an NPRACH frequency-hopping range in all frequency domain resources used to transmit an NPRACH.

For example, that the terminal device obtains resource configuration information may include: The terminal device receives the resource configuration information sent by the network device; or the terminal device obtains the resource configuration information from a local cache. The resource configuration information is configured by the network device when the terminal device is initiated.

For example, the network device may deliver the resource configuration information each time the terminal device needs to send the scheduling request.

For example, the network device may periodically send the resource configuration information to the terminal device.

For example, the network device configures the resource configuration information when the terminal device is initialized. The terminal device stores the resource configuration information in the local cache, and obtains the resource configuration information from the local cache when the terminal device needs to send the scheduling request. A manner of obtaining the resource configuration information is relatively flexible. Herein, that the terminal device is initialized means that the terminal device is powered on, the terminal device establishes an RRC connection, the terminal device re-establishes an RRC connection, the terminal device performs RRC reconfiguration, or the like.

In this embodiment, the network device may deliver the resource configuration information each time the terminal device needs to send the scheduling request, or the network device may periodically send the resource configuration information to the terminal device. Alternatively, the network device configures the resource configuration information when the terminal device is initialized. The terminal device stores the resource configuration information in the local cache, and obtains the resource configuration information from the local cache when the terminal device needs to send the scheduling request. A manner of obtaining the resource configuration information is relatively flexible, so that reliability of obtaining the resource configuration information by the terminal device is ensured.

Step 102: The terminal device sends the scheduling request to the network device on the resource indicated by the resource configuration information, where a preset correspondence exists between a sequence carried in the scheduling request and an amount of uplink data that is requested to be sent by the terminal device to the network device.

For example, in this embodiment, the preset correspondence between a sequence carried in the scheduling request and an amount of uplink data that is requested to be sent by the terminal device to the network device may be pre-established. There may be a one-to-one correspondence or a one-to-many correspondence between the sequence carried in the scheduling request and the amount of uplink data that is requested to be sent by the terminal device to the network device.

For example, one sequence may correspond to one fixed amount of uplink data, or one sequence may correspond to one group of amounts of uplink data, or one sequence may correspond to one range of an amount of uplink data. A person skilled in the art may set, based on an actual situation, the preset correspondence between a sequence carried in the scheduling request and an amount of uplink data that is requested to be sent by the terminal device to the network device. This is not limited in this application.

For example, when uplink data arrives and there is no available UL-SCH resource, the sequence carried in the scheduling request is determined based on the correspondence between a sequence carried in the scheduling request and an amount of uplink data that is requested to be sent by the terminal device to the network device, and the scheduling request is sent on a resource allocated by the network device.

For example, the terminal device performs timing advance adjustment before sending the scheduling request. The timing advance adjustment is to ensure orthogonality of uplink transmission, so that times at which signals that are of different terminal devices and that arrive in a same subframe arrive at the network device is the same or a time difference between times at which signals arrive at the network device falls within a range of a cyclic prefix, to avoid intra-cell interference. A process of timing advance adjustment herein is the same as that in the prior art. The terminal device determines a timing advance based on a timing advance command sent by the network device, and uses the timing advance when sending uplink data.

Step 103: The network device receives the scheduling request that is sent by the terminal device on the resource indicated by the resource configuration information.

Step 104: The network device determines, based on the scheduling request, the amount of uplink data that is requested to be sent by the network device.

For example, the network device detects, on an allocated resource, whether a scheduling request is reported; obtains, based on a sequence carried in a detected scheduling request, information about an amount that is of uplink data and that needs to be reported by the terminal device; and sends scheduling information to the terminal device. The scheduling information is used to indicate a resource used by the terminal device to send uplink data. After receiving the scheduling information sent by the network device, the terminal device sends uplink data to the network device at a resource location indicated by the scheduling information.

For example, in this embodiment, the resource configuration information, the resource indicated by the resource configuration information, and the scheduling request in step 103 and step 104 are the same as the resource configuration information, the resource indicated the resource configuration information, and the scheduling request in step 101 and step 102. Details are not described herein again.

According to the information transmission method provided in this embodiment of this application, the terminal device obtains the resource configuration information used to indicate the resource used by the terminal device to send the scheduling request, and sends the scheduling request to the network device on the resource indicated by the resource configuration information. The network device determines, based on the scheduling request, the amount of uplink data that is requested to be sent by the network device, and configures a resource suitable for the amount of uplink data for the terminal device. Because the preset correspondence exists between the sequence carried in the scheduling request and the amount of uplink data that is requested to be sent by the terminal device to the network device, the amount of uplink data that is requested to be sent by the terminal may be determined based on the sequence carried in the scheduling request. In this way, a step of reporting a BSR (Buffer Status Report, buffer status report) can be reduced. A process is simple, and a delay and power consumption are greatly reduced.

For example, based on the embodiment shown in FIG. 3, the scheduling request includes a plurality of symbol groups in time domain, and each symbol group includes a cyclic prefix and a plurality of symbols.

In this embodiment, different scheduling requests are formed by using a symbol as a granularity in time domain, setting different quantity of symbols, and adding different sequences to different symbols, so as to indicate different amounts of uplink data. This method is simple and has stronger scalability.

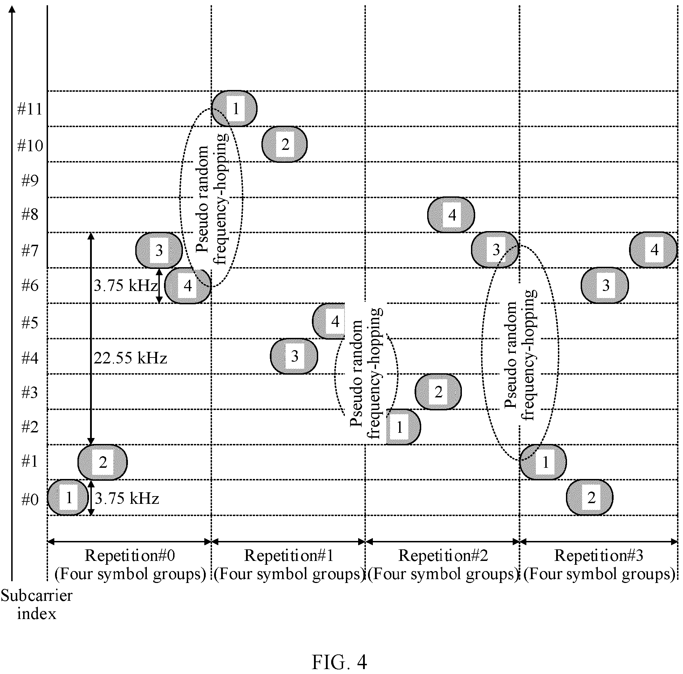

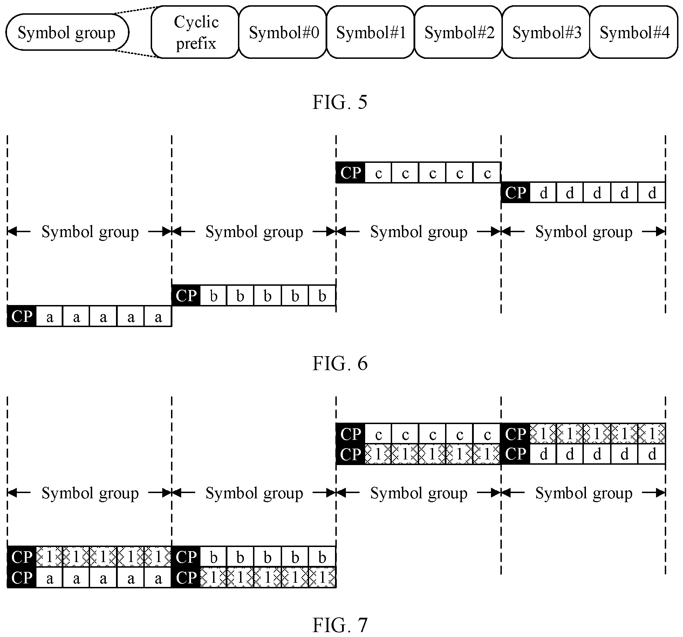

FIG. 4 is a schematic diagram of a signal format of a scheduling request according to an embodiment of this application. FIG. 5 is a schematic diagram of a symbol group format according to an embodiment of this application. In this embodiment, the signal format of the scheduling request may use a design of an NPRACH preamble (preamble), or may use another format different from a signal format of the NPRACH preamble. This is not limited in this application. As shown in FIG. 4 and FIG. 5, one scheduling request includes four symbol groups, and each symbol group includes a cyclic prefix and a plurality of symbols.

For example, in the embodiment shown in FIG. 4, the scheduling request is transmitted in a single-carrier frequency-hopping manner. A frequency domain location for transmitting the scheduling request may be limited to 12 subcarriers, and a frequency-hopping range of frequency domain is 12 subcarriers. As shown in FIG. 4, #0 to #11 indicate 12 subcarriers. One carrier bandwidth is 180 kHz, one scheduling request occupies one subcarrier, and a subcarrier bandwidth is 3.75 kHz. Therefore, one carrier may support a maximum of 180/3.75 = 48 scheduling requests. As shown in FIG. 4, symbol groups of the scheduling request in each repetition period in the figure are represented by gray-filled rectangles and numbers, and are denoted as a first symbol group, a second symbol group, a third symbol group, and a fourth symbol group in a time sequence, which are respectively represented by using numbers 1, 2, 3, and 4 in the figure. The scheduling request has two types of frequency-hopping intervals in one repetition period: 3.75 kHz and 22.5 kHz. The frequency-hopping interval is an integer multiple of a subcarrier bandwidth, and a minimum frequency-hopping interval and the subcarrier bandwidth are the same. A frequency-hopping interval between the first symbol group and the second symbol group is 3.75 kHz, and a frequency-hopping interval between the third symbol group and the fourth symbol group is 3.75 kHz. A frequency-hopping interval between the second symbol group and the third symbol group is 22.5 kHz. Pseudo random frequency-hopping is used between two time-continuous repetition periods. A frequency-hopping interval between the two repetition periods is determined based on a pseudo random sequence, and an initialization seed of the pseudo random sequence is a cell identity or a function of a cell identity.

In this embodiment, the scheduling request is transmitted in a single-carrier frequency-hopping manner. This may avoid mutual interference between narrowband physical random access channel (Narrowband Physical Random Access Channel, NPRACH) preamble (preamble) signals. In addition, the scheduling request is transmitted in a single-carrier frequency-hopping manner, so that a configuration manner of a resource used to send the scheduling request is more flexible.

It should be noted that in an actual implementation process, a person skilled in the art may set, based on an actual requirement, a frequency domain location for transmitting the scheduling request. The frequency domain location is not limited to 12 subcarriers. FIG. 4 is merely an example for description, and is not intended to constitute any limitation on the solutions of this application.

For example, in this embodiment, sequences carried on different symbol groups of the scheduling request are different, and sequences carried on different symbols in a same symbol group are the same.

In this embodiment, the signal format of the scheduling request may reuse the design of the NPRACH preamble, to be specific, the scheduling request also uses a single-carrier frequency-hopping manner, and a frequency-hopping pattern is the same as an NPRACH preamble manner. A subcarrier bandwidth, a quantity of symbol groups, a length of a cyclic prefix and a length of a symbol that are in a symbol group, and a quantity of symbols are the same as those of the NPRACH preamble. A difference lies in that a sequence carried on each symbol of the NPRACH preamble is 1, and sequences carried on symbols in different symbol groups are 1. However, in this embodiment of this application, sequences carried on different symbol groups of the scheduling request are different, sequences carried on different symbols in a same symbol group are the same, and different sequences carried on different symbol groups are used to indicate different amounts of uplink data.

In this embodiment, sequences carried on different symbol groups of the scheduling request are different, and sequences carried on different symbols in a same symbol group are the same. Different sequences are carried on different symbol groups to indicate different amounts of uplink data. In this way, a step of separately reporting a BSR can be avoided. A process is simple, and a delay and power consumption are greatly reduced.

FIG. 6 is a schematic diagram of a signal format of a scheduling request according to an embodiment of this application. As shown in FIG. 6, sequences carried on different symbol groups of the scheduling request are different. Sequences carried in the scheduling request are {a, b, c, d}, and a, b, c, and d are respectively carried on different symbol groups. Sequences carried on symbols in each symbol group are the same, and different sequences correspond to different amounts of uplink data.

For example, a sequence carried in the scheduling request may be a Walsh sequence, which may also be referred to as Walsh code. For example, for a case in FIG. 6, a Walsh sequence with a length of 4 may be selected. Table 1 shows a correspondence between a sequence carried in the scheduling request and an uplink quantity. As shown in Table 1, there are four Walsh sequences with a length of 4, and a maximum of four Walsh sequences may be used to carry information about a 2-bit amount of uplink data. BSR_0, BSR_1, BSR_2, and BSR_3 respectively represent four types of different amounts of uplink data. For example, BSR_0 is X0 bytes, BSR_1 is X1 bytes, BSR_2 is X2 bytes, and BSR_3 is X3 bytes; and $X0 < X1 < X2 < X3$. Alternatively, BSR_0, BSR_1, BSR 2, and BSR_3 respectively represent different ranges of an amount of uplink data. For example, Y00 bytes $\leq$ BSR 0 < Y01 bytes, Y10 bytes $\leq$ BSR_1 < Y11 bytes, Y20 bytes $\leq$ BSR_2 < Y21 bytes, and Y30 bytes $\leq$ BSR_2 < Y31 bytes; and $Y00 < Y01 < Y10 < Y11 < Y20 < Y21 < Y30 < Y31$. Specifically, there may be no upper limit Y31.

**Table 1**

|  | a | b | c | d |
|---|---|---|---|---|
| BSR_0 | 1 | 1 | 1 | 1 |
| BSR_1 | 1 | -1 | 1 | -1 |
| BSR_2 | 1 | 1 | -1 | -1 |
| BSR_3 | 1 | -1 | -1 | 1 |

Considering effect of a frequency offset, coherent combination cannot be performed on four symbol groups. Some Walsh sequences may be selected to carry information about a 1-bit amount of uplink data. Table 2 and Table 3 respectively represent another correspondence between a sequence carried in the scheduling request and an uplink quantity. BSR_I and BSR_II respectively represent two different types of amounts of uplink data, for example, BSR_I is Z0 bytes, and BSR_II is Z1 bytes; and $Z0 < Z1$. Alternatively, BSR_I and BSR_II respectively represent different ranges of the amount of uplink data, for example, W00 bytes $\leq$ BSR_I < W01 bytes, and W10 bytes $\leq$ BSR_II < W11 bytes; and $W00 < W01 < W10 < W11$. Specially, there may be no upper limit W11.

**Table 2**

|  | a | b | c | d |
|---|---|---|---|---|
| BSR_I | 1 | 1 | 1 | 1 |
| BSR_II | 1 | -1 | 1 | -1 |

**Table 3**

|        | a  | b  | c  | d  |
|--------|----|----|----|----|
| BSR_I  | 1  | 1  | 1  | 1  |
| BSR_II | 1  | -1 | -1 | 1  |

In this embodiment, the scheduling request has two formats that respectively correspond to two cyclic prefix (Cyclic Prefix, CP) CP lengths. Table 4 shows the two formats of the scheduling request. TCP is a length of a cyclic prefix, and TSEQ is total duration of five symbols in each symbol group. FIG. 4 is merely an example.

**Table 4**

| Scheduling request format | TCP ($\mu$s) | TSEQ ($\mu$s) | Maximum cell radius (km) |
|---------------------------|--------------|---------------|--------------------------|
| 0                         | 66.7         | 5 x 266.67    | 10                       |
| 1                         | 266.67       | 5 x 266.67    | 40                       |

In addition, in this embodiment of this application, a quantity of symbol groups in one repetition period is 4, and a case in which more symbol groups are supported in subsequent evolution is not excluded. Therefore, the quantity of symbol groups is not limited in this application. For example, if the quantity of symbol groups is 8, a sequence carried on each symbol group of the scheduling request may be a Walsh sequence with a length of 8, and may carry information about a maximum of a 3-bit amount of uplink data.

In this embodiment, the signal format of the scheduling request reuses a design of an NPRACH preamble, and is naturally compatible with an NPRACH, so that resource configuration of the scheduling request is more flexible. As shown in FIG. 7, a symbol of the NPRACH preamble is filled with a grid, and a symbol of the scheduling request is not filled. In addition, different sequences are carried by using a symbol group as a granularity to indicate different amounts of uplink data, so as to avoid generating inter-subcarrier interference to the NPRACH.

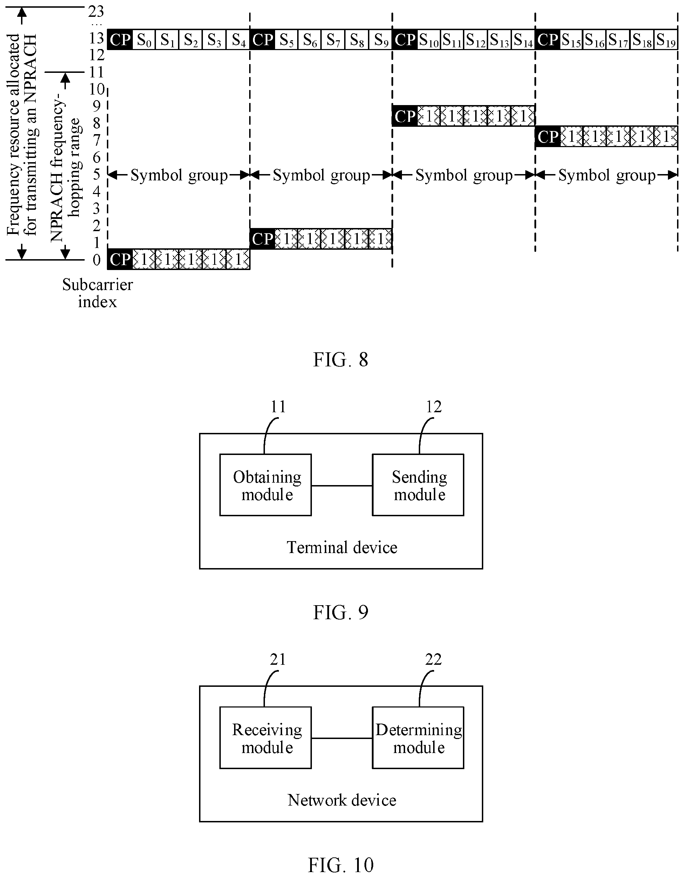

FIG. 8 is a schematic diagram of another signal format of a scheduling request according to an embodiment of this application. For example, as shown in FIG. 8, the scheduling request is transmitted in a single-carrier manner, a plurality of symbol groups in a repeated sending period of the scheduling request are located at a same subcarrier location, and a sending period of the scheduling request includes a plurality of repeated sending periods.

In this embodiment, the sending period of the scheduling request includes the plurality of repeated sending periods. The sending period of the scheduling request may be determined based on a parameter period in the resource configuration information, and a quantity of the repeated sending periods in the sending period may be determined based on a quantity of repetition times in the resource configuration information. A plurality of symbol groups in the repeated sending period of the scheduling request are located at a same subcarrier location, and the plurality of symbol groups of the scheduling request may be located at a same subcarrier location or may be located at different subcarrier locations in different repeated sending periods. For example, in a scenario, one sending period is divided into a repeated sending period a, a repeated sending period b, and a repeated sending period c. Subcarrier locations corresponding to different symbol groups in each repeated sending period are the same, and symbol groups between the repeated sending period a, the repeated sending period b, and the repeated sending period c may be located at a same subcarrier location or may be located at different subcarrier locations. Specially, to better randomize inter-cell interference, a change of subcarrier locations of symbol groups in different repetition periods of the scheduling request is determined based on a pseudo random sequence. The pseudo random sequence may be an m sequence, an M sequence, a gold sequence, or the like. A pseudo random sequence seed is a cell identifier or a function of a cell identifier.

In this embodiment, in frequency domain, different sequences are carried by using a symbol as a granularity to form different scheduling requests, and the scheduling requests are transmitted in a single-carrier manner. In addition, a plurality of symbol groups in a repeated sending period of the scheduling request are located at a same subcarrier location. Therefore, a longer sequence can be formed, a code resource is richer, and a granularity of an amount of uplink data is finer.

For example, in this embodiment, sequences carried on different symbol groups of the scheduling request are different, and sequences carried on different symbols in a same symbol group are different.

In this embodiment, the signal format of the scheduling request reuses a design of an NPRACH preamble, but a frequency-hopping design is removed. To be specific, a single-carrier manner is used. A subcarrier bandwidth, a quantity of symbol groups, a length of the CP and a length of a symbol in a symbol group, and a quantity of symbols that are of the scheduling request are the same as those of the NPRACH preamble. A sequence carried on each symbol of the NPRACH preamble is 1, and sequences carried on symbols in different symbol groups are 1.

In this embodiment, sequences carried on different symbol groups of the scheduling request are different, and sequences carried on different symbols in a same symbol group are also different, so that a more refined scheduling request may be formed, to indicate a plurality of types of amounts of uplink data. Therefore, a resource allocated by a network device to a terminal device for sending uplink data is more accurate, and proper utilization of the resource is ensured.

In this embodiment, to avoid the scheduling request from interfering in transmitting an NPRACH preamble, all frequency domain resources allocated for transmitting the NPRACH preamble may be used to transmit the scheduling request; or the scheduling request may be transmitted on a resource, other than resources whose quantity is an integer multiple of resources in an NPRACH frequency-hopping range in all frequency domain resources allocated for transmitting an NPRACH preamble. As shown in FIG. 8, a symbol of the NPRACH preamble is filled with a grid, and a symbol of the scheduling request is not filled. In one carrier, a frequency domain resource allocated for transmitting the NPRACH preamble is 24 subcarriers, and a frequency-hopping range of an NPRACH is 12 subcarriers. A subcarrier 0 to a subcarrier 11 are used to transmit the NPRACH preamble, and a subcarrier 12 to a subcarrier 23 may be used to transmit the scheduling request.

In this embodiment, a sequence carried in the scheduling request may be an m sequence, an M sequence, a ZC sequence, a Walsh sequence, or the like. For example, in the scenario shown in FIG. 8, a ZC sequence with a length of 20 may be selected. ZC sequences with different root factors, or ZC sequences with same root factors but different cyclic shifts, or ZC sequences with different root factors and different cyclic shifts separately represent different information

$$s_n = e^{-j\frac{\pi u n(n+1)}{20}}$$

about an amount of uplink data. For example, a formula $s_n = e^{-j\frac{\pi u n(n+1)}{20}}$ is used to calculate a sequence carried on each symbol; and in the formula, n represents an index, $n=0, 1, ..., 19$, u represents a root factor, and a value range of u is $1, 2, ..., 19$. Therefore, if the ZC sequences with different roots are used to form the scheduling request, the ZC sequence may carry information about a maximum of a 4bit amount of uplink data.

According to the information transmission method provided in this embodiment of this application, different sequences are carried on different symbols to indicate different amounts of uplink data, so that a delay and power consumption can be further reduced. In addition, different sequences are carried by using a symbol as a granularity to form different scheduling requests. Therefore, a longer sequence can be used, a code resource is richer, and a granularity of an amount of uplink data can be finer.

FIG. 9 is a block diagram of a terminal device according to an embodiment of this application. The terminal device may be configured to perform the technical solutions on a terminal device side in any one of the foregoing method embodiments. As shown in FIG. 9, the terminal device includes an obtaining module 11 and a sending module 12.

The obtaining module 11 is configured to obtain the resource configuration information, and the resource configuration information is used to indicate a resource used by the terminal device to send the scheduling request. The sending module 12 is configured to send the scheduling request to a network device on the resource indicated by the resource configuration information obtained by the obtaining module 11, and a preset correspondence exists between a sequence carried in the scheduling request and an amount of uplink data that is requested to be sent by the terminal device to the network device.

For example, the scheduling request includes a plurality of symbol groups in time domain, and each symbol group includes a cyclic prefix and at least one symbol.

For example, the scheduling request is transmitted in a single-carrier frequency-hopping manner.

For example, sequences carried on different symbol groups of the scheduling request are different, and sequences carried on different symbols in a same symbol group are the same.

For example, the scheduling request is transmitted in a single-carrier manner, a plurality of symbol groups in a repeated sending period of the scheduling request are located at a same subcarrier location, and a sending period of the scheduling request includes a plurality of repeated sending periods.

For example, sequences carried on different symbol groups of the scheduling request are different, and sequences carried on different symbols in a same symbol group are different.

For example, the obtaining module 11 is specifically configured to receive the resource configuration information sent by the network device, or obtain the resource configuration information from a local cache. The resource configuration information is configured by the network device for the terminal device when the terminal device is initialized.

FIG. 10 is a block diagram of a network device according to an embodiment of this application. The network device may be configured to perform the technical solutions on a network device side in any one of the foregoing method embodiments. As shown in FIG. 10, the network device includes a receiving module 21 and a determining module 22. The receiving module 21 is configured to receive, on a resource indicated by the resource configuration information, the scheduling request sent by the terminal device. The resource configuration information is used to indicate the resource used by the terminal device to send the scheduling request, and a preset correspondence exists between a sequence carried in the scheduling request and an amount of uplink data that is requested to be sent by the terminal device to the network device. The determining module 22 is configured to determine, based on the scheduling request received by the receiving module 21, the amount of uplink data that is requested to be sent by the network device.

For example, the scheduling request includes a plurality of symbol groups in time domain, and each symbol group includes a cyclic prefix and a plurality of symbols.

For example, the scheduling request is transmitted in a single-carrier frequency-hopping manner.

For example, sequences carried on different symbol groups of the scheduling request are different, and sequences carried on different symbols in a same symbol group are the same.

For example, the scheduling request is transmitted in a single-carrier manner, a plurality of symbol groups in a repeated sending period of the scheduling request are located at a same subcarrier location, and a sending period of the scheduling request includes at least one repeated sending period.

For example, sequences carried on different symbol groups of the scheduling request are different, and sequences carried on different symbols in a same symbol group are different.

For example, the resource configuration information is sent by the network device to the terminal device. Alternatively, the resource configuration information is obtained by the terminal device from a local cache, and the resource configuration information is configured by the network device for the terminal device when the terminal device is initialized.

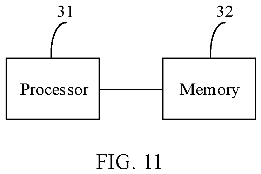

FIG. 11 is a block diagram of a terminal device according to an embodiment of this application. As shown in FIG. 11, the terminal device includes a processor 31 and a memory 32. The memory 32 is configured to store an instruction, and the processor 31 is configured to execute the instruction stored in the memory 32. When the processor 31 executes the instruction stored in the memory 32, the terminal device is configured to perform the method on a terminal device side in any one of the foregoing embodiments.

For example, an embodiment of this application further provides a network device. A structural block diagram of the network device is the same as a structure in FIG. 11. The network device includes a processor 31 and a memory 32. The memory 32 is configured to store an instruction, and the processor 31 is configured to execute the instruction stored in the memory 32. When the processor 31 executes the instruction stored in the memory 32, the network device is configured to perform the method on a network device side in any one of the foregoing embodiments.

This application further provides a readable storage medium, and the readable storage medium stores an instruction. When at least one processor of a terminal device executes the instruction, the terminal device performs the information transmission method provided in any one of the foregoing method embodiments.

This application further provides a readable storage medium, and the readable storage medium stores an instruction. When at least one processor of a network device executes the instruction, the network device performs the information transmission method provided in any one of the foregoing method embodiments.

This application further provides a program product. The program product includes an instruction, and the instruction is stored in a readable storage medium. At least one processor of a terminal device may read the instruction from the readable storage medium, and execute the instruction, to enable the terminal device to perform the information transmission method provided in any one of the method embodiments.

This application further provides a program product. The program product includes an instruction, and the instruction is stored in a readable storage medium. At least one processor of a network device may read the instruction from the readable storage medium, and execute the instruction, to enable the network device to perform the information transmission method provided in any one of the foregoing method embodiments.

This application further provides a network system, and the network system includes the terminal device and the network device in any one of the foregoing embodiments.

In a specific implementation of the terminal device or the network device, it should be understood that a processor may be a central processing unit (English: Central Processing Unit, CPU for short), or may be another general purpose processor, a digital signal processor (English: Digital Signal Processor, DSP for short), an application-specific integrated circuit (English: Application Specific Integrated Circuit, ASIC for short), or the like. The general purpose processor may be a microprocessor, or the processor may be any conventional processor or the like. The steps of the methods disclosed with reference to this application may be directly performed by a hardware processor, or may be performed by a combination of hardware and a software module in the processor.

All or some of the steps of the foregoing method embodiments may be performed by hardware related to a program instruction. The foregoing program may be stored in a readable memory. When the program is executed, the steps in the foregoing method embodiments are performed. The memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information transmission method, comprising:

   Obtaining (S101), by a terminal device, resource configuration information, wherein the resource configuration information is used to indicate a resource used by the terminal device to send a scheduling request; and
   Sending (S102), by the terminal device, the scheduling request to a network device on the resource indicated by the resource configuration information, wherein a preset correspondence exists between a sequence carried in the scheduling request and an amount of uplink data that is requested to be sent by the terminal device to the network device;
   **characterized in that**
   the scheduling request comprises a plurality of symbol groups in time domain, and each symbol group comprises a cyclic prefix and at least one symbol;
   the scheduling request is transmitted in a single-carrier frequency-hopping manner; and
   the sequences carried on different symbol groups of the scheduling request are different, and sequences carried on different symbols in a same symbol group are the same.

2. An information transmission method, comprising:

   Obtaining (S101), by a terminal device, resource configuration information, wherein the resource configuration information is used to indicate a resource used by the terminal device to send a scheduling request; and
   Sending (S102), by the terminal device, the scheduling request to a network device on the resource indicated by the resource configuration information, wherein a preset correspondence exists between a sequence carried in the scheduling request and an amount of uplink data that is requested to be sent by the terminal device to the network device;
   **characterized in that**
   the scheduling request comprises a plurality of symbol groups in time domain, and each symbol group comprises a cyclic prefix and at least one symbol;
   the scheduling request is transmitted in a single-carrier manner, all symbol groups in a repeated sending period of the scheduling request are located at a same subcarrier location, and a sending period of the scheduling request comprises at least one repeated sending period; and
   the sequences carried on different symbol groups of the scheduling request are different, and sequences carried on different symbols in a same symbol group are different.

3. The method according to any one of claims 1 to 2, wherein the obtaining, by a terminal device, resource configuration information comprises:

   receiving, by the terminal device, the resource configuration information sent by the network device; or
   obtaining, by the terminal device, the resource configuration information from a local cache, wherein the resource configuration information is configured by the network device for the terminal device when the terminal device is initialized.

4. A terminal device, comprising:

   an obtaining module (11), configured to obtain resource configuration information, wherein the resource configuration information is used to indicate a resource used by the terminal device to send a scheduling request; and
   a sending module (12), configured to send the scheduling request to a network device on the resource indicated by the resource configuration information obtained by the obtaining module, wherein a preset correspondence exists between a sequence carried in the scheduling request and an amount of uplink data that is requested to be sent by the terminal device to the network device;
   **characterized in that**
   the scheduling request comprises a plurality of symbol groups in time domain, and each symbol group comprises a cyclic prefix and at least one symbol;
   the scheduling request is transmitted in a single-carrier frequency-hopping manner; and

the sequences carried on different symbol groups of the scheduling request are different, and sequences carried on different symbols in a same symbol group are the same.

5. A terminal device, comprising:

an obtaining module (11), configured to obtain resource configuration information, wherein the resource configuration information is used to indicate a resource used by the terminal device to send a scheduling request; and a sending module (12), configured to send the scheduling request to a network device on the resource indicated by the resource configuration information obtained by the obtaining module, wherein a preset correspondence exists between a sequence carried in the scheduling request and an amount of uplink data that is requested to be sent by the terminal device to the network device;
**characterized in that**
the scheduling request comprises a plurality of symbol groups in time domain, and each symbol group comprises a cyclic prefix and at least one symbol;
the scheduling request is transmitted in a single-carrier manner, all symbol groups in a repeated sending period of the scheduling request are located at a same subcarrier location, and a sending period of the scheduling request comprises at least one repeated sending period; and
the sequences carried on different symbol groups of the scheduling request are different, and sequences carried on different symbols in a same symbol group are different.

6. The terminal device according to any one of claims 4 to 5, wherein the obtaining module is specifically configured to:

receive the resource configuration information sent by the network device; or
obtain the resource configuration information from a local cache, wherein the resource configuration information is configured by the network device for the terminal device when the terminal device is initialized.

7. A readable storage medium, wherein the readable storage medium stores an executable instruction, and when at least one processor of a terminal device executes the executable instruction, the terminal device performs the information transmission method according to any one of claims 1 to 3.

**Patentansprüche**

1. Datenübertragungsverfahren, das Folgendes umfasst:

Erhalten (S101) durch eine Endgerätvorrichtung von Betriebsmittelkonfigurationsinformationen, wobei die Betriebsmittelkonfigurationsinformationen verwendet werden, um ein Betriebsmittel anzugeben, das durch die Endgerätvorrichtung verwendet wird, um eine Planungsanforderung zu senden; und
Senden (S102) durch die Endgerätvorrichtung der Planungsanforderung an eine Netzvorrichtung auf dem Betriebsmittel, das durch die Betriebsmittelkonfigurationsinformationen angegeben wird, wobei eine voreingestellte Korrespondenz zwischen einer Folge, die in der Planungsanforderung übermittelt wird, und einer Menge von Aufwärtsstreckendaten, die angefordert wird, durch die Endgerätvorrichtung an die Netzvorrichtung gesendet zu werden, besteht;
**dadurch gekennzeichnet, dass**
die Planungsanforderung mehrere Symbolgruppen in einem Zeitbereich umfasst und jede Symbolgruppe einen zyklischen Präfix und mindestens ein Symbol umfasst;
die Planungsanforderung in einer Einzelträger-Frequenzsprung-Weise gesendet wird; und
die Folgen, die auf verschiedenen Symbolgruppen der Planungsanforderung übermittelt werden, verschieden sind und Folgen, die auf verschiedenen Symbolen in derselben Symbolgruppe übermittelt werden, dieselben sind.

2. Datenübertragungsverfahren, das Folgendes umfasst:

Erhalten (S101) durch eine Endgerätvorrichtung von Betriebsmittelkonfigurationsinformationen, wobei die Betriebsmittelkonfigurationsinformationen verwendet werden, um ein Betriebsmittel anzugeben, das durch die Endgerätvorrichtung verwendet wird, um eine Planungsanforderung zu senden; und
Senden (S102) durch die Endgerätvorrichtung der Planungsanforderung an eine Netzvorrichtung auf dem Betriebsmittel, das durch die Betriebsmittelkonfigurationsinformationen angegeben wird, wobei eine voreingestellte Korrespondenz zwischen einer Folge, die in der Planungsanforderung übermittelt wird, und einer Menge von Aufwärtsstreckendaten, die angefordert wird, durch die Endgerätvorrichtung an die Netzvorrichtung gesendet zu werden, besteht;

**dadurch gekennzeichnet, dass**

die Planungsanforderung mehrere Symbolgruppen in einem Zeitbereich umfasst und jede Symbolgruppe einen zyklischen Präfix und mindestens ein Symbol umfasst;

die Planungsanforderung in einer Einzelträger-Weise gesendet wird, wobei sich alle Symbolgruppen in einer wiederholten Sendeperiode in der Planungsanforderung an demselben Unterträgerort befinden und eine Sendeperiode der Planungsanforderung mindestens eine wiederholte Sendeperiode umfasst; und

die Folgen, die auf verschiedenen Symbolgruppen der Planungsanforderung übermittelt werden, verschieden sind und Folgen, die auf verschiedenen Symbolen in derselben Symbolgruppe übermittelt werden, verschieden sind.

3. Verfahren nach einem der Ansprüche 1 bis 2, wobei das Erhalten durch eine Endgerätvorrichtung von Betriebsmittelkonfigurationsinformationen Folgendes umfasst:

Empfangen durch die Endgerätvorrichtung der Betriebsmittelkonfigurationsinformationen, die durch die Netzvorrichtung gesendet werden; oder

Erhalten durch die Endgerätvorrichtung der Betriebsmittelkonfigurationsinformationen aus einem lokalen Zwischenspeicher, wobei die Betriebsmittelkonfigurationsinformationen durch die Netzvorrichtung für die Endgerätvorrichtung konfiguriert werden, wenn die Endgerätvorrichtung initialisiert wird.

4. Endgerätvorrichtung, die Folgendes umfasst:

ein Erhaltungsmodul (11), das konfiguriert ist, Betriebsmittelkonfigurationsinformationen zu erhalten, wobei die Betriebsmittelkonfigurationsinformationen verwendet werden, um ein Betriebsmittel anzugeben, das durch die Endgerätvorrichtung verwendet wird, um eine Planungsanforderung zu senden; und

ein Sendemodul (12), das konfiguriert ist, die Planungsanforderung an eine Netzvorrichtung auf dem Betriebsmittel, das durch die Betriebsmittelkonfigurationsinformationen angegeben wird, die durch das Erhaltungsmodul erhalten werden, zu senden, wobei eine voreingestellte Korrespondenz zwischen einer Folge, die in der Planungsanforderung übermittelt wird, und einer Menge von Aufwärtsstreckendaten, die angefordert wird, durch die Endgerätvorrichtung an die Netzvorrichtung gesendet zu werden, besteht;

**dadurch gekennzeichnet, dass**

die Planungsanforderung mehrere Symbolgruppen in einem Zeitbereich umfasst und jede Symbolgruppe einen zyklischen Präfix und mindestens ein Symbol umfasst;

die Planungsanforderung in einer Einzelträger-Frequenzsprung-Weise gesendet wird; und

die Folgen, die auf verschiedenen Symbolgruppen der Planungsanforderung übermittelt werden, verschieden sind und Folgen, die auf verschiedenen Symbolen in derselben Symbolgruppe übermittelt werden, dieselben sind.

5. Endgerätvorrichtung, die Folgendes umfasst:

ein Erhaltungsmodul (11), das konfiguriert ist, Betriebsmittelkonfigurationsinformationen zu erhalten, wobei die Betriebsmittelkonfigurationsinformationen verwendet werden, um ein Betriebsmittel anzugeben, das durch die Endgerätvorrichtung verwendet wird, um eine Planungsanforderung zu senden; und

ein Sendemodul (12), das konfiguriert ist, die Planungsanforderung an eine Netzvorrichtung auf dem Betriebsmittel, das durch die Betriebsmittelkonfigurationsinformationen angegeben wird, die durch das Erhaltungsmodul erhalten werden, zu senden, wobei eine voreingestellte Korrespondenz zwischen einer Folge, die in der Planungsanforderung übermittelt wird, und einer Menge von Aufwärtsstreckendaten, die angefordert wird, durch die Endgerätvorrichtung an die Netzvorrichtung gesendet zu werden, besteht;

**dadurch gekennzeichnet, dass**

die Planungsanforderung mehrere Symbolgruppen in einem Zeitbereich umfasst und jede Symbolgruppe einen zyklischen Präfix und mindestens ein Symbol umfasst;

die Planungsanforderung in einer Einzelträger-Weise gesendet wird, wobei sich alle Symbolgruppen in einer wiederholten Sendeperiode der Planungsanforderung an demselben Unterträgerort befinden und eine Sendeperiode der Planungsanforderung mindestens eine wiederholte Sendeperiode umfasst; und

die Folgen, die auf verschiedenen Symbolgruppen der Planungsanforderung übermittelt werden, verschieden sind und Folgen, die auf verschiedenen Symbolen in derselben Symbolgruppe übermittelt werden, verschieden sind.

6. Endgerätvorrichtung nach einem der Ansprüche 4 bis 5, wobei das Erhaltungsmodul speziell konfiguriert ist zum:

Empfangen der durch die Netzvorrichtung gesendeten Betriebsmittelkonfigurationsinformationen; oder Erhalten der Betriebsmittelkonfigurationsinformationen aus einem lokalen Zwischenspeicher, wobei die Betriebsmittelkonfigurationsinformationen durch die Netzvorrichtung für die Endgerätvorrichtung konfiguriert werden, wenn die Endgerätvorrichtung initialisiert wird.

7. Lesbares Speichermedium, wobei das lesbare Speichermedium eine ausführbare Anweisung speichert und dann, wenn mindestens ein Prozessor einer Endgerätvorrichtung die ausführbare Anweisung ausführt, die Endgerätvorrichtung das Datenübertragungsverfahren nach einem der Ansprüche 1 bis 3 ausführt.

**Revendications**

1. Procédé de transmission d'informations, comprenant :

l'obtention (S101), par un dispositif de terminal, d'informations de configuration de ressource, dans lequel les informations de configuration de ressource sont utilisées pour indiquer une ressource utilisée par le dispositif de terminal pour envoyer une demande d'ordonnancement ; et
l'envoi (S102), par le dispositif de terminal, de la demande d'ordonnancement à un dispositif de réseau sur la ressource indiquée par les informations de configuration de ressource, dans lequel une correspondance prédéfinie existe entre une séquence portée dans la demande d'ordonnancement et une quantité de données de liaison montante dont l'envoi, par le dispositif de terminal, au dispositif de réseau, est demandé ;
**caractérisé en ce que**
la demande d'ordonnancement comprend une pluralité de groupes de symboles en domaine temporel, et chaque groupe de symboles comprend un préfixe cyclique et au moins un symbole ;
la demande d'ordonnancement est transmise de manière à saut de fréquence à porteuse unique ; et
les séquences portées sur différents groupes de symboles de la demande d'ordonnancement sont différentes, et des séquences portées sur différents symboles dans un même groupe de symboles sont les mêmes.

2. Procédé de transmission d'informations, comprenant :

l'obtention (S101), par un dispositif de terminal, d'informations de configuration de ressource, dans lequel les informations de configuration de ressource sont utilisées pour indiquer une ressource utilisée par le dispositif de terminal pour envoyer une demande d'ordonnancement ; et
l'envoi (S102), par le dispositif de terminal, de la demande d'ordonnancement à un dispositif de réseau sur la ressource indiquée par les informations de configuration de ressource, dans lequel une correspondance prédéfinie existe entre une séquence portée dans la demande d'ordonnancement et une quantité de données de liaison montante dont l'envoi, par le dispositif de terminal, au dispositif de réseau, est demandé ;
**caractérisé en ce que**
la demande d'ordonnancement comprend une pluralité de groupes de symboles en domaine temporel, et chaque groupe de symboles comprend un préfixe cyclique et au moins un symbole ;
la demande d'ordonnancement est transmise de manière à porteuse unique, tous les groupes de symboles dans une période d'envoi répétée de la demande d'ordonnancement sont situés à un même emplacement de sous-porteuse, et une période d'envoi de la demande d'ordonnancement comprend au moins une période d'envoi répétée ; et
les séquences portées sur différents groupes de symboles de la demande d'ordonnancement sont différentes, et des séquences portées sur différents symboles dans un même groupe de symboles sont différentes.

3. Procédé selon l'une quelconque des revendications 1 et 2, dans lequel l'obtention, par un dispositif de terminal, d'informations de configuration de ressource comprend :

la réception, par le dispositif de terminal, des informations de configuration de ressource envoyées par le dispositif de réseau ; ou
l'obtention, par le dispositif de terminal, des informations de configuration de ressource à partir d'une mémoire cache locale, dans lequel les informations de configuration de ressource sont configurées par le dispositif de réseau pour le dispositif de terminal lorsque le dispositif de terminal est initialisé.

4. Dispositif de terminal, comprenant :

un module d'obtention (11), configuré pour obtenir des informations de configuration de ressource, dans lequel les informations de configuration de ressource sont utilisées pour indiquer une ressource utilisée par le dispositif de terminal pour envoyer une demande d'ordonnancement ; et
un module d'envoi (12), configuré pour envoyer la demande d'ordonnancement à un dispositif de réseau sur la ressource indiquée par les informations de configuration de ressource obtenues par le module d'obtention, dans lequel une correspondance prédéfinie existe entre une séquence portée dans la demande d'ordonnancement et une quantité de données de liaison montante dont l'envoi, par le dispositif de terminal, au dispositif de réseau, est demandé ;
**caractérisé en ce que**
la demande d'ordonnancement comprend une pluralité de groupes de symboles en domaine temporel, et chaque groupe de symboles comprend un préfixe cyclique et au moins un symbole ;
la demande d'ordonnancement est transmise de manière à saut de fréquence à porteuse unique ; et
les séquences portées sur différents groupes de symboles de la demande d'ordonnancement sont différentes, et des séquences portées sur différents symboles dans un même groupe de symboles sont les mêmes.

5. Dispositif de terminal, comprenant :

un module d'obtention (11), configuré pour obtenir des informations de configuration de ressource, dans lequel les informations de configuration de ressource sont utilisées pour indiquer une ressource utilisée par le dispositif de terminal pour envoyer une demande d'ordonnancement ; et
un module d'envoi (12), configuré pour envoyer la demande d'ordonnancement à un dispositif de réseau sur la ressource indiquée par les informations de configuration de ressource obtenues par le module d'obtention, dans lequel une correspondance prédéfinie existe entre une séquence portée dans la demande d'ordonnancement et une quantité de données de liaison montante dont l'envoi, par le dispositif de terminal, au dispositif de réseau, est demandé ;
**caractérisé en ce que**
la demande d'ordonnancement comprend une pluralité de groupes de symboles en domaine temporel, et chaque groupe de symboles comprend un préfixe cyclique et au moins un symbole ;
la demande d'ordonnancement est transmise de manière à porteuse unique, tous les groupes de symboles dans une période d'envoi répétée de la demande d'ordonnancement sont situés à un même emplacement de sous-porteuse, et une période d'envoi de la demande d'ordonnancement comprend au moins une période d'envoi répétée ; et
les séquences portées sur différents groupes de symboles de la demande d'ordonnancement sont différentes, et des séquences portées sur différents symboles dans un même groupe de symboles sont différentes.

6. Dispositif de terminal selon l'une quelconque des revendications 4 et 5, dans lequel le module d'obtention est spécifiquement configuré pour :

recevoir les informations de configuration de ressource envoyées par le dispositif de réseau ; ou
obtenir les informations de configuration de ressource à partir d'une mémoire cache locale, dans lequel les informations de configuration de ressource sont configurées par le dispositif de réseau pour le dispositif de terminal lorsque le dispositif de terminal est initialisé.

7. Support de stockage lisible, le support de stockage lisible stockant une instruction exécutable, et lorsqu'au moins un processeur d'un dispositif de terminal exécute l'instruction exécutable, le dispositif de terminal réalisant le procédé de transmission d'informations selon l'une quelconque des revendications 1 à 3.

Terminal device                                                    Base station

— Uplink data arrives →

Random access preamble ——————→

←—————— NPDCCH ——————

←—————— Random access response ——————

RRC connection request ——————→

←—————— NPDCCH ——————

←—————— Establish an RRC connection ——————

HARQ-ACK feedback ——————→

←—————— NPDCCH ——————

The RRC connection is established ——————→

←—————— NPDCCH ——————

Uplink data ——————→

FIG. 1

FIG. 2

```
┌─────────────┐                                    ┌─────────────┐
│  Terminal   │                                    │  Network    │
│   device    │                                    │  device     │
└──────┬──────┘                                    └──────┬──────┘
       │                                                  │
┌──────┴─────────────────┐                                │
│ Step 101: The terminal │                                │
│ device obtains resource│                                │
│ configuration information                               │
└──────┬─────────────────┘                                │
       │                                                  │
       │  Step 102: The terminal device sends a scheduling│
       │  request to the network device on a resource indicated
       │  by the resource configuration information, where a
       │  preset correspondence exists between a sequence │
       │  carried in the scheduling request and an amount of
       │  uplink data that is requested to be sent by the terminal
       │  device to the network device                    │
       │ ────────────────────────────────────────────────▶│
       │                                      ┌───────────┴──────────┐
       │                                      │ Step 103: The network device
       │                                      │ receives the scheduling request that is
       │                                      │ sent by the terminal device on the
       │                                      │ resource indicated by the resource
       │                                      │ configuration information
       │                                      └───────────┬──────────┘
       │                                      ┌───────────┴──────────┐
       │                                      │ Step 104: The network device
       │                                      │ determines, based on the scheduling
       │                                      │ request, the amount of uplink data
       │                                      │ that is requested to be sent by the
       │                                      │ network device
       │                                      └───────────┬──────────┘
       │                                                  │
```

FIG. 3

FIG. 4

Symbol group | Cyclic prefix | Symbol#0 | Symbol#1 | Symbol#2 | Symbol#3 | Symbol#4

FIG. 5

FIG. 6

FIG. 7

FIG. 8

FIG. 9

FIG. 10

31    32

Processor — Memory

FIG. 11

**EP 3 651 514 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016032077 A1
- WO 2013166670 A1
- EP 2675081 A1